# EUROPÄISCHE PATENTSCHRIFT

(11) **EP 4 214 048 B1**
(45) Veröffentlichungstag und Bekanntmachung des Hinweises auf die Patenterteilung: **29.07.2026**
(21) Anmeldenummer: 21773402.9
(22) Anmeldetag: 09.09.2021
(51) Int. Cl.: B32B 7/023, B32B 25/08, B32B 25/14, B32B 27/08, B32B 27/18, B32B 27/28, B32B 27/30, B32B 27/36

(54) **MEHRSCHICHTKÖRPER FÜR DIFFUSE DURCHLEUCHTUNG**
MULTILAYER BODY FOR DIFFUSE ILLUMINATION
CORPS MULTICOUCHE POUR L'ÉCLAIRAGE DIFFUS

(30) Priorität: 18.09.2020 EP 20196826
(43) Veröffentlichungstag der Anmeldung: 26.07.2023
(73) Patentinhaber: Covestro Deutschland AG, 51373 Leverkusen (DE)
(72) Erfinder: SEIDEL, Andreas, 41542 Dormagen (DE); PIERMATTEO, Ciro, 51369 Leverkusen (DE); OSER, Rafael, 47800 Krefeld (DE); KLANKERS, Hans-Juergen, 51373 Leverkusen (DE); HELMIG, Jan, 41541 Dormagen (DE)
(74) Vertreter: Levpat
(86) Internationale Anmeldenummer: PCT/EP2021/074751
(87) Internationale Veröffentlichungsnummer: WO 2022/058222

(56) Entgegenhaltungen:
- WO-A1-2006/115851
- WO-A1-2017/186690
- WO-A1-2019/170569
- WO-A1-2019/185627

## Beschreibung

Die vorliegende Erfindung betrifft einen Mehrschichtkörper umfassend in dieser Reihenfolge eine Trägerschicht aus einer thermoplastischen Polycarbonat-Formmasse, mindestens eine Schicht aus einem Farbmittel oder einer Farbmittelzusammensetzung und eine Folie, eine Beleuchtungseinheit umfassend den Mehrschichtkörper und eine Lichtquelle, ein Verfahren zur Herstellung des Mehrschichtkörpers sowie die Verwendung einer thermoplastischen Polycarbonat- Formmasse als Trägerschicht eines solchen Mehrschichtkörpers.

Thermoplastische Polycarbonat- oder Polyestercarbonatformmassen und ihre Zusammensetzungen sind seit vielen Jahren bekannt und in zahlreichen Dokumenten beschrieben. Aus den Formmassen werden Formkörper beispielsweise für den Automobilbereich, den Bausektor und den Elektronikbereich hergestellt.

Im Automobilinnenraum wie auch in Automobilkarosserieanwendungen kommen vermehrt ambiente Beleuchtungselemente bzw. hinterleuchtete Funktions-/Displayelemente zum Einsatz. Ein Markttrend besteht darin, die Beleuchtung bzw. die Darstellung von Funktion nur bei Bedarf einzuschalten/einzublenden, z.B. um eine Tag-Nacht-Differenzierung des Erscheinungsbildes solcher Elemente zu realisieren oder um durch eine solche ambiente dynamische Beleuchtung die Raumwahrnehmung im Automobilinnenraum zu intensivieren bzw. die Abbildung von Informationen bedarfs- und situationsgerecht zu ermöglichen.

Für solche Anwendungen geeignete Bauteile sind beispielsweise Mehrschichtkörper umfassend eine Trägerschicht, eine mit Licht im sichtbaren Wellenlängenbereich durchleuchtbare Folie sowie mindestens eine sich dazwischen befindliche Schicht aus einem Farbmittel oder einer Farbmittelzusammensetzung (im weiteren Kontext der Anmeldung auch vereinfacht als "Farbmittelschicht" bezeichnet). Die Trägerschicht und die Folie können mittels einer Lichtquelle mit sichtbarem Licht (d.h. Licht im Wellenlängenbereich von 380 bis 780 nm) durchleuchtet werden, wodurch das Erscheinungsbild des Mehrschichtkörpers in gewünschter Weise geändert wird. Über die Farbgebung der Folie und der Farbmittelschicht(en), über die Transparenz bzw. Opazität der Farbmittelschicht(en) sowie über eine nur partielle Aufbringung der oder bestimmter Farbmittelschicht(en) in Teilbereichen zwischen Folie und Trägerschicht lassen sich unterschiedlichste Erscheinungsbilder im Tag- und Nachtmodus bzw. im "an"- und "aus"-Anzeigemodus realisieren. Beispielsweise kann der Mehrschichtkörper im Tagmodus eine opake Hochglanz-Optik in einer beliebigen gewünschten Farbgebung aufweisen und im Nachtmodus vollständig oder alternativ zur Abbildung bestimmter Beleuchtungsmuster oder Logos auch nur partiell durchleuchtet werden. Hierfür wird in den Bereichen, in denen im Nachtmodus bzw. "an"-Anzeigemodus keine Durchleuchtung gewünscht ist, eine opake Farbmittelschicht zwischen Folie und Trägerschicht aufgetragen. In den Bereichen, in denen im Nachtmodus bzw. im "an"-Anzeigemodus eine Durchleuchtung gewünscht ist, wird entweder keine Farbmittelschicht oder eine durchleuchtbare Farbmittelschicht zwischen Folie und Trägerschicht aufgetragen. Die gewünschte Farbgebung des Mehrschichtkörpers im Tagmodus bzw. "aus"-Anzeigemodus sowie die gewünschte Farbgebung der im Nachtmodus bzw. "an"-Anzeigemodus durchleuchteten Bereiche kann durch die Farbgebung entweder der Folie in diesen Bereichen, der Trägerschicht und/oder der Farbmittelschicht realisiert werden.

Die Trägerschicht muss dabei eine ausreichende Transmission für das eingestrahlte Licht aufweisen, um die Darstellung eines besonderen Erscheinungsbildes überhaupt zu ermöglichen.

Mehrschichtkörper mit durchleuchtbaren, das heißt transluzenten oder transparenten Schichten sind bekannt. WO2006/115851 A1 offenbart Mehrschichtartikel umfassend: (i) eine erste Schicht, umfassend ein Acrylharz; (ii) mindestens eine durchscheinende zweite Schicht, umfassend (a) ein Acrylharz, gegebenenfalls ferner umfassend einen Schlagzähmodifikator; (b) eine kautschukmodifizierte thermoplastische Harzzusammensetzung; (c) optional einen Rheologiemodifikator; und (d) ein Additiv für visuelle Effekte; (iii) eine dritte Schicht, umfassend ein Acrylnitril-Butadien-Styrol (ABS) -Harz; und (iv) eine optionale Trägerschicht, die entweder ein duromeres, gegebenenfalls faserverstärktes, Polymersubstrat, oder ein glasgefülltes ABS-Harz umfasst.

Für einen ansprechenden optischen Eindruck ist es zudem oft wünschenswert, dass die Trägerschicht das Licht einer punktförmigen Lichtquelle, beispielsweise einer LED, zumindest in einem gewissen Maße streut und damit diffus auf die Folie verteilt. Andernfalls wäre die Lichtquelle für den Betrachter sichtbar und/oder der gewünscht visuelle Effekt beim Einschalten der Lichtquelle nur auf einen kleinen Bereich des Mehrschichtkörpers begrenzt. Zur Erzielung eines solchen diffusen Lichteindrucks einer von einer punktförmigen Lichtquelle durchstrahlten Fläche des Mehrschichtkörpers ist es erforderlich, dass die Trägerschicht einerseits eine möglichst hohe Transmission des eingestrahlten sichtbaren Lichts und andererseits eine möglichst hohe, durch Lichtstreuung bedingte Lichtdiffusität, d.h. einen möglichst hohen Halbwertswinkel des durch eine punktförmige Lichtquelle nach Durchtritt durch die Trägerschicht resultierenden Lichtkegels, aufweist. Je höher dieser Halbwertswinkel ist, desto räumlich homogener ist die wahrgenommene Beleuchtungsintensität des von einer punktförmigen Lichtquelle ausgehenden Lichts nach Durchtritt durch die Trägerschicht. Bei höherem Halbwertswinkel der Trägerschicht können somit auch größere Flächen durch punktförmige Lichtquellen mit räumlich weitgehend homogener Lichtintensität durchstrahlt werden. Im Allgemeinen sind Transmission und Lichtdiffusivität (Halbwertswinkel) eines Materials nicht unabhängig voneinander einstellbar und in der Regel gegenläufig zueinander. Eine Optimierung der Lichtdiffusivität durch Materialmodifizierung, beispielsweise durch Änderung seiner Zusammensetzung, resultiert somit meist in abnehmender Transmission. Beide Größen sind dabei insbesondere auch von der durchleuchteten Materialschichtdicke abhängig, wobei mit zunehmender Schichtdicke die Transmission ab- und die Lichtdiffusivität eines transluzenten Materials zunimmt.

Die Mehrschichtkörper können hergestellt werden, indem zunächst eine durchleuchtbare Folie mit einem Farbmittel (teilweise) bedruckt und anschließend mit dem Trägermaterial hinterspritzt wird. Das Verfahren des Folienhinterspritzens, auch Film Insert Moulding (FIM) genannt, ist seit einigen Jahren bekannt und wird vielfach angewendet.

Häufig eingesetzte Trägermaterialien sind beispielsweise Polycarbonat-Formassen enthaltend Streupartikel wie etwa Glaskugeln, Streupigmente oder andere Polymere mit von Polycarbonat abweichendem Brechnungsindex. Diese Polymere werden oft als vernetzte Partikel, gern auch zur Erzielung einer verbesserten Kompatibilität mit und Dispergierung in der Polycarbonat-Matrix als partikuläres Pfropfpolymer mit einer Pfropfhülle aus einem Polymer, welches mit Polycarbonat verträglich oder teilverträglich ist (z. B. mit einer Polymethylmethacrylathülle), eingesetzt.

Ein Nachteil solcher Formmassen ist die hohe Erweichungstemperatur von Polycarbonat. Bei der Herstellung von Mehrschichtkörpern muss daher zur Erreichung einer guten Fließfähigkeit des Polycarbonats eine hohe Verarbeitungstemperatur gewählt werden. Dies kann zur Schädigung der Folie (beispielswiese zu einer ungewünschten Verformung) oder zu mangelhafter oder unvollständiger Anhaftung der Folie an die Trägerschicht und zu einer unregelmäßigen Oberflächenerscheinung des Mehrschichtkörpers (sogenannte Orangenhautbildung) führen. Insbesondere kann es außerdem zu Auswaschungen der Farbmittel aus der oder aus einer der Farbmittelschichten, mit denen die Folie bedruckt ist, kommen. Weiterhin weisen solche Formmassen eine für manche Anwendungen unzureichende Zähigkeit, insbesondere bei tiefen Temperaturen, auf. Damit kommt der Einsatz in einigen sicherheitsrelevanten Bauteilen nicht infrage.

Das oben genannte Problem der Auswaschungen ist in der Literatur, beispielsweise in EP1343844 B1 und DE 103 12 610 beschrieben. Eine Möglichkeit zur Vermeidung dieses Phänomens ist es, die bedruckte Folie (Dekorschicht) mit einer Schutzschicht zu versehen, so dass die Polymerschmelze nicht direkt mit der Dekorschicht in Berührung kommt. Die Schutzschicht kann beispielsweise aus Polycarbonat bestehen und etwa durch Coextrusion aufgebracht werden.

Alternativ wird in DE 103 12 610 A1 zur Vermeidung der Auswaschungen ein Verfahren beschrieben, bei dem ein Schutzelement in Form eines Netzes, Gewebes oder Vlieses im Bereich der Eintrittsöffnung der Polymerschmelze in das Spritzgusswerkzeug die Dekorschicht schützt.

Die beschriebenen Verfahren erhöhen jedoch den Aufwand hinsichtlich Materialeinsatz und Prozessführung bei der Herstellung des Mehrschichtkörpers.

Zur Verbesserung der Schmelzefließfähigkeit - und damit einer Reduktion der thermischen Belastung der Farbmittel - kann Polycarbonat grundsätzlich mit mindestens einem weiteren Thermoplasten gemischt und zu einer Polycarbonat-Blend-Formmasse verarbeitet werden. Über die Wahl der Blendpartner und weiterer Komponenten wie beispielsweise Additive kann das Eigenschaftsprofil der Formmasse und der Formkörper neben den rheologischen Eigenschaften auch hinsichtlich mechanischer und thermischer Charakteristika in weiten Teilen variiert und an die Anforderungen der jeweiligen Anwendung angepasst werden.

Allerdings sind Formkörper aus Polycarbonat-Blend-Formmassen in der Regel opak bzw. in unzureichendem Maße transluzent und damit Mehrschichtkörper mit solchen Formmassen nicht geeignet, die oben genannten optischen Anforderungen zu erfüllen.

Es war daher wünschenswert, einen Mehrschichtkörper bereitzustellen, der die oben beschriebene dynamische Beleuchtung und/oder Einblendung von Funktionen ermöglicht. Weiterhin war es wünschenswert, dass der Mehrschichtkörper einfach herstellbar ist, das heißt, ein stabiler Verbund von Folie und Trägermaterial erzielt wird, ohne dass die Folie dabei beschädigt, deformiert oder das Farbmittel ausgewaschen wird und ohne dass das Verfahren der Folienhinterspritzung besondere Prozessschritte wie Aufbringen eines Schutzes auf die dekorative Folie, besondere Verfahrensführung oder spezielle Apparaturen erfordert. Dafür war es erforderlich, dass das Trägermaterial einerseits eine Kombination aus guter Transmission für sichtbares Licht und hoher Lichtdiffusivität aufweist und andererseits bei vergleichsweise niedrigen Temperaturen spritzgegossen und mit der Folie verbunden werden kann, das heißt auch bei niedrigeren Temperaturen eine hohe Schmelzefließfähigkeit bzw. niedrige Schmelzeviskosität aufweist.

Weiterhin war es wünschenswert, dass das Trägermaterial eine hohe Zähigkeit, auch bei tiefen Temperaturen aufweist und damit der Mehrschichtkörper für ein breites Anwendungsfeld, z. B. auch für Sicherheitsbauteile, geeignet ist.

Überraschendweise wurde gefunden, dass ein Mehrschichtkörper,
umfassend in dieser Reihenfolge
(I) eine Trägerschicht aus einer thermoplastischen Formmasse enthaltend
   A) mindestens ein Vertreter ausgewählt aus der Gruppe bestehend aus aromatischem Polycarbonat und aromatischen Polyestercarbonat,
   B) kautschukmodifiziertes Vinyl(co)polymerisat aus
      B.1) 80 bis 95 Gew.-%, bezogen auf das kautschukmodifizierte Vinyl(co)polymerisat B, Struktureinheiten abgeleitet von wenigstens einem Vinylmonomeren und
      B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C enthaltend mindestens 50 Gew.-%, bezogen auf B.2, an vom 1,3-Butadien abgeleiteten Struktureinheiten,
         wobei das kautschukmodifizierte Vinyl(co)polymerisat B
            (i) eine disperse Phase bestehend aus
               (i.1) mit Vinyl(co)polymerisat aus Struktureinheiten gemäß B.1 gepfropften Kautschukpartikeln und
               (i.2) in den Kautschukpartikeln als separierte disperse Phase eingeschlossenes Vinyl(co)polymerisat ebenfalls aus Struktureinheiten gemäß B.1
                  und
            (ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1
         enthält,
         wobei die disperse Phase gemäß (i) einen mittleren Durchmesser D50 gemessen per Ultrazentrifugation von 0,7 bis 2,0 µm aufweist,
   C) optional mindestens eine weitere Komponente ausgewählt aus Polymeradditiven und polymeren Blendpartnern,
   wobei die thermoplastische Formmasse weniger als 2 Gew.-%, an von Komponente B) verschiedenen, kautschukbasierten Pfropfpolymeren enthält und
   wobei die thermoplastische Formmasse einen Kautschukgehalt von mindestens 1,5 Gew.-%, aufweist,
(II) mindestens eine Schicht bestehend aus einem Farbmittel oder einer Farbmittelzusammensetzung, die zumindest einen Teil der Fläche zwischen Trägerschicht und Folie bedeckt und
(III) eine Folie, die genannte Aufgabe löst.

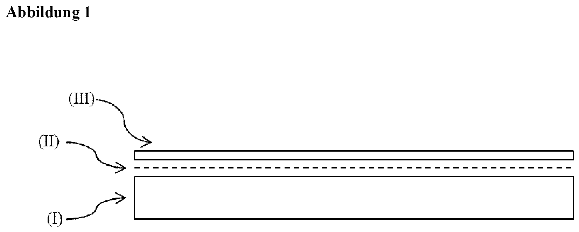

Ein erfindungsgemäßer Mehrschichtkörper ist in Abbildung 1 schematisch dargestellt.

In bevorzugter Ausführungsform enthält die thermoplastische Formmasse der Trägerschicht (I)
30 bis 85 Gew.-%, weiter bevorzugt 50 bis 82 Gew.-%, noch weiter bevorzugt 58 bis 82 Gew.- %, am meisten bevorzugt 65 bis 75 Gew.-% der Komponente A,
14 bis 69 Gew.-%, weiter bevorzugt 17 bis 49 Gew.-%, noch weiter bevorzugt 17 bis 41 Gew.- %, am meisten bevorzugt 24 bis 34 Gew.-% der Komponente B,
0,05 bis 20 Gew.-%, weiter bevorzugt 0,1 bis 10 Gew.-%, noch weiter bevorzugt 0,2 bis 5 Gew.-%, am meisten bevorzugt 0,3 bis 2 Gew.-% der Komponente C.

In bevorzugter Ausführungsform enthält die Formmasse der Trägerschicht (I) weniger als 1 Gew.-%, weiter bevorzugt weniger als 0,5 Gew.-%, noch weiter bevorzugt weniger als 0,2 Gew.-% an von Komponente B) verschiedenen, kautschukbasierten Pfropfpolymeren. Am meisten bevorzugt enthält die Formmasse keinerlei von Komponente B) verschiedene, kautschukbasierte Pfropfpolymere.

In bevorzugter Ausführungsform weist die Formmasse der Trägerschicht (I) einen Kautschukgehalt im Bereich von 1,5 bis 6 Gew.-%, weiter bevorzugt im Bereich 1,8 bis 5 Gew.-%, noch weiter bevorzugt im Bereich 1,9 bis 4,1 Gew.-%, am meisten bevorzugt im Bereich 2,5 bis 3,0 Gew.-% auf.

Die zuvor genannten Vorzugsbereiche der Komponenten A und B sowie der Komponente C können beliebig miteinander kombiniert werden.

Die Trägerschicht (I) besteht in bevorzugter Ausführungsform aus einer thermoplastischen Formmasse, welche zu mindestens 80 Gew.-%, weiter bevorzugt zu mindestens 95 Gew.-%, stärker bevorzugt zu mindestens 99 Gew.-% am stärksten bevorzugt zu 100 Gew.-% aus den Komponenten A, B und C besteht.

Der Mehrschichtkörper ist dazu geeignet mittels einer Lichtquelle mit sichtbarem Licht durchleuchtet zu werden, das heißt der Mehrschichtkörper ist bevorzugt durchleuchtbar. Die Lichtquelle ist so angeordnet, dass das Licht zunächst auf das Trägermaterial (I) trifft und durch die Schicht (II) schließlich die Folie (III) erreicht. Bevorzugt handelt es sich bei der Lichtquelle um eine LED Lichtquelle.

Durchleuchtbar bedeutet, dass sich beim Einschalten der Lichtquelle der visuelle Eindruck auf der der Lichtquelle abgewandten Seite ändert.

In bevorzugter Ausführungsform weist der Mehrschichtkörper mindestens in Teilbereichen in seiner tatsächlichen dortigen Dicke bei mindestens einer Wellenlänge im Wellenlängenbereich des Spektrums von 380 bis 780 nm einen Transmissionsgrad von mindestens 10 % , weiter bevorzugt mindestens 25% noch weiter bevorzugt mindestens 40 % und am meisten bevorzugt von mindestens 45 % auf, wobei der Transmissionsgrad aus dem Transmissionsspektrum ermittelt wird, welches gemäß der Vorgaben in der DIN/ISO 13468-2 in der Version von 2006 gemessen wird,

Ein weiterer Gegenstand der Erfindung ist die Verwendung einer Formmasse aus den oben angegebenen Komponenten A, B und C und den weiteren angegebenen Merkmalen als Trägerschicht (I) in einem wie oben beschriebenen Mehrschichtkörper.

Ein weiterer Gegenstand der Erfindung ist eine Beleuchtungseinheit umfassend den Mehrschichtkörper wie oben angegeben und eine Lichtquelle, welche Licht mit mindestens einer Wellenlänge im Wellenlängenbereich des Spektrums von 380 bis 780 nm ausstrahlt, wobei die Lichtquelle so angeordnet ist, dass die Trägerschicht von dem von der Lichtquelle abgestrahlten Licht durchstrahlt wird.

Ein weiterer Gegenstand der Erfindung ist ein Verfahrens zur Herstellung eines Mehrschichtkörpers, umfassend die Schritte
a) Herstellung einer Folie
b) Bedrucken zumindest eines Teils der Folie mit mindestens einer Schicht bestehend aus einem Farbmittel oder einer Farbmittelzusammensetzung,
c) optional Thermoformen der Folie,
d) Hinterspritzen der Folie mit einer wie oben beschriebenen thermoplastischen Formmasse.

### Zusammensetzung der Trägerschicht

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934). Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 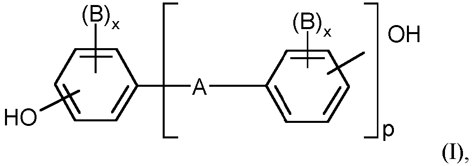 wobei
A eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
   oder ein Rest der Formel (II) oder (III) 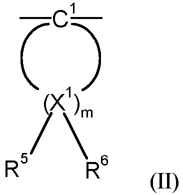 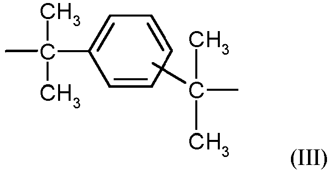
B jeweils C₁ bis C₁₂-Alkyl, vorzugsweise Methyl, Halogen, vorzugsweise Chlor und/oder Brom
x jeweils unabhängig voneinander 0, 1 oder 2,
p 1 oder 0 sind, und
R⁵ und R⁶ für jedes X¹ individuell wählbar, unabhängig voneinander Wasserstoff oder C₁ bis C₆-Alkyl, vorzugsweise Wasserstoff, Methyl oder Ethyl,
X1 Kohlenstoff und
m eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Molekulargewichte (Gewichtsmittel M_{w}, gemessen durch GPC (Gelpermeationschromatographie) mit Polycarbonatstandard auf Basis Bisphenol A) von bevorzugt 20000 bis 40000 g/mol, weiter bevorzugt 24000 bis 32000 g/mol, besonders bevorzugt 26000 bis 30000 g/mol. Durch die bevorzugten Bereiche wird in den erfindungsgemäßen Zusammensetzungen eine besonders vorteilhafte Balance aus mechanischen und rheologischen Eigenschaften erreicht.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercabonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Esterals auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

Bevorzugt wird als Komponente A lineares Polycarbonat auf Basis von ausschließlich Bisphenol A eingesetzt.

### Komponente B

Bei Komponente B handelt es sich um kautschukmodifizierte Vinyl(co)polymerisate aus
B.1) 80 bis 95 Gew.-%, bevorzugt 83 bis 93 Gew.-%, weiter bevorzugt 85 bis 92 Gew.-%, bezogen auf das kautschukmodifizierte Vinyl(co)polymerisat B, Struktureinheiten abgeleitet von wenigstens einem Vinylmonomeren und
B.2) 5 bis 20 Gew.-%, bevorzugt 7 bis 17 Gew.-%, weiter bevorzugt 8 bis 15 Gew.- %, bezogen auf das kautschukmodifizierte Vinyl(co)polymerisat B, einer oder mehrerer kautschukelastischer Pfropfgrundlagen mit Glasübergangstemperaturen T_{g} < -50°C, bevorzugt von < -60°C, besonders bevorzugt < -70°C enthaltend mindestens 50 Gew.-%, bevorzugt mindestens 70 Gew.-%, besonders bevorzugt 100 Gew.-%, bezogen auf B.2, an vom 1,3-Butadien abgeleiteten Struktureinheiten,
   wobei das kautschukmodifizierte Vinyl(co)polymerisat B
      (i) eine disperse Phase bestehend aus
         (i.1) mit Vinyl(co)polymerisat aus Struktureinheiten gemäß B.1 gepfropften Kautschukpartikeln und
         (i.2) in den Kautschukpartikeln als separierte disperse Phase eingeschlossenes Vinyl(co)polymerisat ebenfalls aus Struktureinheiten gemäß B.1
            und
      (ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1
   enthält,
und wobei die disperse Phase gemäß (i) einen mittleren Durchmesser D50 gemessen per Ultrazentrifugation von 0,7 bis 2,0 µm, bevorzugt von 0,7 bis 1,5 µm, insbesondere von 0,7 bis 1,2 aufweist.

Die Glasübergangstemperatur T_{g} wird, sofern in der vorliegenden Erfindung nicht ausdrücklich anders beschrieben, für alle Komponenten mittels dynamischer Differenzkalorimetrie (DSC) nach DIN EN 61006 (Version von 1994) bei einer Heizrate von 10 K/min mit Bestimmung der Tg als Mittelpunkttemperatur (Tangentenmethode) ermittelt.

Die kautschukmodifizierten Vinyl(co)polymerisate gemäß Komponente B weisen eine Schmelzeflussrate (MVR), gemessen gemäß ISO 1133 (Version von 2012) bei 220°C mit einer Stempellast von 10 kg, von bevorzugt 2 bis 20 ml/10min, besonders bevorzugt 3 bis 15 ml/10min, insbesondere 4 bis 8 ml/10min auf. Kommen Mischungen aus mehreren kautschukmodifizierten Vinyl(co)polymerisaten als Komponente B zum Einsatz, so gelten die bevorzugten MVR-Bereiche für den Mittelwert des über die Massenanteile der Komponenten in der Mischung gewichteten MVRs der Einzelkomponenten.

Derartige kautschukmodifizierte Vinyl(co)polymerisate B werden beispielsweise hergestellt durch radikalische Polymerisation, bevorzugt im Masse-Polymerisationsverfahren, von

| | |
|---|---|
| B.1 | 80 bis 95 Gew.-%, bevorzugt 83 bis 93 Gew.-%, besonders bevorzugt 85 bis 92 Gew.- %, bezogen auf das kautschukmodifizierte Vinyl(co)polymerisat B, wenigstens eines Vinylmonomeren in Anwesenheit von |
| B. 2 | 5 bis 20 Gew.-%, bevorzugt 7 bis 17 Gew.-%, besonders bevorzugt 8 bis 15 Gew.-%, bezogen auf das kautschukmodifizierte Vinyl(co)polymerisat B, einer oder mehrerer kautschukelastischer Pfropfgrundlagen mit Glasübergangstemperaturen < -50°C, bevorzugt < -60°C, besonders bevorzugt < -70°C, enthaltend mindestens 50 Gew.-%, bevorzugt mindestens 70 Gew.-%, besonders bevorzugt 100 Gew.-% bezogen auf B.2, an vom 1,3-Butadien abgeleiteten Struktureinheiten. |

Bei dem zur Herstellung des kautschukmodifizierten Vinyl(co)polymerisats B bevorzugt angewandten Masse-Polymerisationsverfahren erfolgt sowohl die Polymerisation der Vinylmonomeren gemäß B.1 als auch eine Pfropfung des so entstehenden Vinyl(co)polymers auf die kautschukelastische Pfropfgrundlage gemäß B.2. Des Weiteren erfolgt bei dieser Reaktionsführung durch Selbstorganisation (Phasenseparation) die Ausbildung einer dispersen Phase (i) bestehend aus
(i.1) mit Vinyl(co)polymerisat aus Struktureinheiten gemäß B.1 gepfropften Kautschukpartikeln und
(i.2) in den Kautschukpartikeln als separierte disperse Phase eingeschlossenes Vinyl(co)polymerisat ebenfalls aus Struktureinheiten gemäß B.1,
wobei diese kautschukhaltige Phase (i) in einer nicht an die Kautschukpartikel gebundene und nicht in diese Kautschukpartikel eingeschlossene kautschukfreie Vinyl(co)polymerisat-Matrix (ii) bestehend aus Struktureinheiten gemäß B.1 dispergiert vorliegt.

Das kautschukfreie Vinyl(co)polymerisat (ii) lässt sich im Gegensatz zu den anderen Vinyl(co)polymerisat-Anteilen in der Komponente B durch geeignete Lösungsmittel wie beispielsweise Aceton herauslösen.

Die Größe der dispersen Phase (i) in den so hergestellten kautschukmodifizierten Vinyl(co)polymerisaten B wird über die Bedingungen der Reaktionsführung wie Temperatur und daraus resultierende Viskosität des Polymerisats sowie Scherung durch beispielsweise Rühren eingestellt.

Die mittlere Teilchengröße D50 ist der Durchmesser, oberhalb und unterhalb dessen jeweils 50 Gew.-% der Teilchen liegen. Er wird, soweit in der vorliegenden Erfindung nicht ausdrücklich anders beschrieben, für alle Komponenten mittels Ultrazentrifugenmessung (W. Scholtan, H. Lange, Kolloid, Z. und Z. Polymere 250 (1972), 782-796) bestimmt.

Die Monomere B.1 sind vorzugsweise Gemische bestehend aus

| | |
|---|---|
| B.1.1 | 60 bis 85 Gew.-Teilen, besonders bevorzugt 65 bis 80 Gew.-Teilen, weiter bevorzugt 70 bis 78 Gew.-Teilen, jeweils bezogen auf die Summe aus B.1.1 und B.1.2, Styrol und |
| B.1.2 | 15 bis 40 Gew.-Teilen, besonders bevorzugt 20 bis 35 Gew.-Teilen, weiter bevorzugt 22 bis 30 Gew.-Teilen, jeweils bezogen auf die Summe aus B.1.1 und B.1.2, Acrylnitril |

sowie optional B.1.3 0-10 Gew.-Teilen, bevorzugt 0-7 Gew.-Teilen, weiter bevorzugt 0-5 Gew.-Teilen Methylmethacrylat oder n-Butylacrylat, jeweils bezogen auf 100 Gew.-Teile als Summe von B.1.1 und B.1.2.

In einer weiteren bevorzugten Ausführungsform handelt es sich bei den Monomeren B.1 um ein Gemisch aus 22 bis 26 Gew.-Teilen Acrylnitril und 74 bis 78 Gew.-Teilen Styrol, welches optional bis zu 10 Gew.-Teilen, besonders bevorzugt bis zu 5 Gew.-Teilen an n-Butylacrylat oder Methylmethacrylat enthalten kann, wobei die Summe der Gewichtteile an Styrol und Acrylnitril 100 Gew.-Teile ergeben.

Besonders bevorzugt ist B.1 frei von B.1.3, wobei bezüglich B.1.1 und B.1.2 die oben genannten bevorzugten Bereiche gelten.

Bevorzugte Pfropfgrundlagen B.2 sind Dienkautschuke enthaltend Butadien, oder Gemische von Dienkautschuken enthaltend Butadien oder Copolymerisate von Dienkautschuken enthaltend Butadien oder deren Gemische mit weiteren copolymerisierbaren Monomeren (z.B. gemäß B.1.1 und B.1.2).

Besonders bevorzugt als Pfropfgrundlage B.2 ist reiner Polybutadienkautschuk. In einer weiteren bevorzugten Ausführungsform handelt es sich bei B.2 um Styrol-Butadien-Blockcopolymer-Kautschuk.

Die Komponente B weist bevorzugt einen Polybutadiengehalt von 5 bis 18 Gew.-%, weiter bevorzugt von 7 bis 15 Gew.-%, insbesondere von 8 bis 13 Gew.-% auf.

Besonders bevorzugte kautschukmodifizierte Vinyl(co)polymerisate gemäß Komponente B sind Masse-ABS-Polymerisate wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Das nicht an die Kautschukgrundlage(n) B.2 chemisch gebundene und nicht in den Kautschukpartikeln eingeschlossene Vinyl(co)polymerisat (ii) kann wie zuvor dargestellt herstellungsbedingt bei der Polymerisation der Pfropfpolymerisate B entstehen. Ebenso ist es möglich, dass ein Teil dieses nicht an die Kautschukgrundlage(n) B.2 chemisch gebundene und nicht in den Kautschukpartikeln eingeschlossene Vinyl(co)polymerisats (ii) im kautschukmodifizierten Vinyl(co)polymerisat gemäß Komponente B herstellungsbedingt bei dessen Herstellung im Masse-Polymerisationsverfahren entsteht und ein anderer Teil separat polymerisiert und der Komponente B als Bestandteil der Komponente B zugesetzt wird. Der Anteil des Vinyl(co)polymerisats (ii), unabhängig von dessen Ursprung, gemessen als in Aceton löslicher Anteil, beträgt in der Komponente B, bezogen auf die Komponente B, bevorzugt mindestens 50 Gew.-%, besonders bevorzugt mindestens 60 Gew-%, weiter bevorzugt mindestens 70 Gew.-%.

Dieses Vinyl(co)polymerisat (ii) weist in den kautschukmodifizierten Vinyl(co)polymerisaten gemäß Komponente B ein gewichtgemitteltes Molekulargewicht M_{w} von 70 bis 250 kg/mol, bevorzugt von 130 bis 200 kg/mol, insbesondere von 150 bis 180 kg/mol auf.

Das gewichtsgemittelte Molekulargewicht M_{w} des Vinyl(co)polymerisats (ii) in Komponente B wird im Rahmen der vorliegenden Erfindung per Gelpermeationschromatographie (GPC) in Tetrahydrofuran gegen Polystyrol als Standard gemessen.

Die Komponente B ist bevorzugt frei von Alkali-, Erdalkali-, Ammonium- oder PhosphoniumSalzen von gesättigten Fettsäuren mit 8 bis 22 Kohlenstoffatomen, Harzsäuren, Alkyl- und Alkylarylsulfonsäuren und Fettalkoholsulfaten.

Die Komponente B enthält bevorzugt weniger als 100 ppm, besonders bevorzugt weniger als 50 ppm, ganz besonders bevorzugt weniger als 20 ppm Ionen von Alkalimetallen und Erdalkalimetallen.

Als Komponente B geeignete kautschukmodifizierte Vinyl(co)polymerisate sind beispielsweise Magnum^{™} 3404, Magnum^{™} 3504 und Magnum^{™} 3904 der Firma Trinseo S.A. (Luxemburg).

### Komponente C

Als Komponente C können optional ein oder mehrere Vertreter ausgewählt aus der Gruppe bestehend aus Polymeradditiven und polymeren Blendpartnern enthalten sein.

Die Polymeradditive bzw. polymeren Blendpartner sind bevorzugt ausgewählt aus der Gruppe bestehend aus Gleit- und Entformungsmitteln, Stabilisatoren, Farbmitteln, Verträglichkeitsvermittlern, weiteren von Komponente B verschiedenen Schlagzähigkeitsmodifikatoren, weiteren von den Komponenten A und B verschiedenen polymeren Bestandteilen (beispielsweise funktionelle Blendpartner oder Pfropfpolymerisate mit Kern-Schale-Struktur hergestellt im Emulsions-Polymerisationsverfahren) sowie Füll- und Verstärkungsstoffen.

In bevorzugter Ausführungsform sind in Komponente C keine Füll- oder Verstärkungsstoffe enthalten. Weiter bevorzugt sind keine Farbmittel enthalten. Weiter bevorzugt sind keine polymeren Blendpartner enthalten. Weiter bevorzugt sind keine polymeren Komponenten enthalten. In besonders bevorzugter Ausführungsform sind weder Füll- oder Verstärkungsstoffe, Farbmittel noch polymere Blendpartner enthalten. Am stärksten bevorzugt sind weder Füll- oder Verstärkungsstoffe, Farbmittel noch polymere Komponenten enthalten.

In bevorzugter Ausführungsform wird als Komponente C mindestens ein Polymeradditiv ausgewählt aus der Gruppe bestehend aus Gleit- und Entformungsmitteln und Stabilisatoren eingesetzt.

In bevorzugter Ausführungsform wird als Stabilisator mindestens ein Vertreter ausgewählt aus der Gruppe bestehend aus sterisch gehinderten Phenolen, organischen Phosphiten, und organischen oder anorganischen Brönstedt-Säuren eingesetzt.

In bevorzugter Ausführungsform wird als Stabilisator mindestens ein Vertreter ausgewählt aus der Gruppe bestehend aus sterisch gehinderten Phenolen, organischen Phosphiten, und organischen oder anorganischen Brönstedt-Säuren eingesetzt.

Als Gleit-und Entformungsmittel werden in bevorzugter Ausführungsform Fettsäureester, besonders bevorzugt Fettsäureester des Pentaerythrits oder Glycerins, eingesetzt.

In einer besonders bevorzugten Ausführungsform wird als Komponente C mindestens ein Polymeradditiv ausgewählt aus der Gruppe bestehend aus C8-C22-Fettsäureester des Pentaerythrits, C8-C22-Fettsäureester des Glycerins, Tris(2,4-di-tert.-butyl-phenyl)-phosphit, 2,6-Di-tert.-butyl-4-(octadecanoxycarbonylethyl)phenol, Tetrakis(2,4-di-tert-butylphenyl)-4,4-biphenyldiphosphonit, Bis(2,4-di-tert-butylphenyl)-pentaerythritoldiphosphit und Triethylenglykol-bis[3-(3-tert-butyl-4-hydroxy-5-methylphenyl)propionat] eingesetzt.

In einer weiteren Ausführungsform enthält die Komponente C kein kautschukmodifiziertes Vinyl(co)polymerisat hergestellt durch Emulsionspolymerisation.

### Herstellung der Formmassen der Trägerschicht

Aus den erfindungsgemäßen Komponenten A, B und C werden thermoplastische Formmassen hergestellt.

Die erfindungsgemäßen thermoplastischen Formmassen können beispielsweise hergestellt werden, indem man die jeweiligen Bestandteile der Zusammensetzungen in bekannter Weise vermischt und bei Temperaturen von bevorzugt 200°C bis 320°C, besonders bevorzugt bei 240 bis 300°C, ganz besonders bevorzugt bei 260°C bis 290°C in üblichen Aggregaten wie beispielsweise Innenknetern, Extrudern und Doppelwellenschnecken schmelzcompoundiert und schmelzextrudiert.

Dieser Prozess wird im Rahmen dieser Anmeldung allgemein als Compoundieren bezeichnet.

Unter Formmasse wird also das Produkt verstanden, das erhaltend wird, wenn die Bestandteile der Zusammensetzung schmelzcompoundiert und schmelzextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

### Farbmittelzusammensetzung

Zum Dekorieren der Folie werden die für die jeweiligen Verfahren üblichen Farbmittelzusammensetzungen, z.B. Siebdruckfarben, Farblacke oder Tinten, verwendet.

Die erfindungsgemäßen Farbmittelzusammensetzungen enthalten als notwendige Komponente mindestens ein Farbmittel. Der Begriff Farbmittel soll organische und anorganische Pigmente und Farbstoffe einschließlich löslicher Farbstoffe bedeuten.

Zusätzlich können eine oder mehrere weitere Komponenten, die man grob in flüchtige und nichtflüchtige Komponenten einteilen kann, enthalten sein.

Zu den nichtflüchtigen Komponenten zählen Bindemittel, Füllstoffe und Hilfsmittel. Hilfsmittel werden meist nur in sehr geringen Mengen benötigt, sind für eine problemlose Verarbeitung jedoch oft unentbehrlich.

Die flüchtigen Bestandteile sind im wesentlichen Flüssigkeiten, in denen die Farbmittel und mögliche andere Bestandteile gelöst oder dispergiert werden. Es kann sich um organische, anorganische Lösemittel oder um Mischungen mehrerer Lösungsmittel handeln. Oftmals ist das Lösungsmittel Wasser oder eine Mischung aus Wasser und einem anderen Lösungsmittel.

Geeignete organische Lösungsmittel sind beispielsweise Ketone, Ester, Alkohole und aromatische oder aliphatische Kohlenwasserstoffe. Es können auch Mischungen mehrerer organischer oder anorganischer Lösungsmittel eingesetzt werden.

Die nichtflüchtigen Bindemittel sorgen dafür, dass die Farbmittel am Substrat verankert werden, damit der fertige Druck Beanspruchungen durch Abrieb, Hitze und mechanische Verbiegung widersteht.

Als Bindemittel für die Farbmittel sind beispielsweise geeignet Nitrocellulose in Kombination mit Weichmachern, thermoplastische Polyurethane, thermoplastische Polyester, thermoplastische Polycarbonate und thermoplastische Poly(meth)acrylate. Es ist auch möglich, dass verschiedene Bindemittel kombiniert werden, wie in DE 198 32 570 A1 beschrieben wird. Es ist auch möglich, das Bindemittel (z.B. ein Polyurethan oder ein Epoxyharz) während der Applikation der Farbmittelzusammensetzung durch chemische Reaktion in situ entstehen zu lassen.

Die Auswahl geeigneter Farbmittel unterliegt praktisch keiner Beschränkung, sofern eine ausreichende Temperaturbeständigkeit gewährleistet ist. Zu geeigneten organischen Farbmitteln gehören beispielsweise Farbmittel aus der Azo-, Antharachinon-, Azoporphin-, Thioindigo-, Dioxazin-, Naphtalintetracarbonsäure- oder Perylentetracarbonsäure-Reihe sowie Phthalocyaninverbindungen. Zu geeigneten anorganischen Farbmitteln gehören beispielsweise Eisenoxide, Ultramarine, Zinksulfide, Siliciumdioxide, Aluminiumoxide, Titanoxide, Nickel- und Chromverbindungen, Phosphor-Wolfram-Molybdänsäure-Bronzen sowie Ruße. Farbmittel mit Spezialeffekten, wie etwa metalloxidbeschichtete Glimmer-Pigmente und metallische Aluminium-Pigmente, können ebenso verwendet werden.

Bei Bedarf kann in die Farbmittelzusammensetzung zusätzlich ein Füllstoff eingearbeitet werden. Zu geeigneten Füllstoffen gehören Carbonate, Sulfate, Silikate und Oxide. Beispielsweise sind gut geeignet Magnesium-, Calcium- und Bariumcarbonat, Calcium- und Bariumsulfat, Silikate und Alumosilikate sowie Aluminium-, Titan-, und Siliciumoxide. Auch Gemische dieser Verbindungen sind einsetzbar.

Ferner können in die Farbmittelzusammensetzung übliche und bekannte Hilfsstoffe eingearbeitet werden. Zu solchen Hilfsstoffen gehören beispielsweise Netz- und Dispergierhilfsmittel, Antiabsetzmittel, Verlaufsmittel, Haftvermittler, Stabilisatoren, Kratzfestmittel und dergleichen.

Die Herstellung der Farbmittelzusammensetzung aus den eingesetzten Komponenten erfolgt durch Durchmischen der Komponenten mittels eines dem Fachmann bekannten Verfahrens wie beispielsweise Dispergierung, Lösung oder Compoundierung in der Schmelze.

Besonders wärmebeständige Farbmittelzusammensetzungen werden beispielsweise in der EP 0688839 A2 beschrieben. Wärmebeständige Farbmittelzusammensetzungen sind zudem von der Fa. Pröll KG, Weißenburg, Deutschland unter der Bezeichnung Noriphan^{®} HTR erhältlich.

Die vorliegende Erfindung ist aber nicht auf sehr wärmebeständige Farbmittelzusammenensetzungen beschränkt. Wie in der Einleitung beschrieben, lassen sich über die erfindungsgemäße Wahl des Trägermaterials mit guter Schmelzefließfähigkeit auch bei niedriger Verarbeitungstemperatur auch solche Farbmittelzusammensetzungen zur Herstellung von Mehrschichtkörpern einsetzen, die empfindlicher gegenüber hohen Temperaturen sind und sich somit bisher gemäß dem Stand der Technik nicht zur Herstellung von Mehrschichtkörpern durch Folienhinterspritzen eigneten.

Farbmittel, die besonders gut für die Siebbedruckung von PMMA-Folien geeignet sind, werden in Dokument DE 101 51 281 A1 beschrieben.

Bei der Herstellung des erfindungsgemäßen Mehrschichtkörpers kann ein Teil oder die Gesamtmenge der in der Farbmittelzusammensetzung enthaltenen flüchtigen Komponenten austreten und somit nicht mehr oder nur in geringerer Menge Bestandteil der Farbmittelzusammensetzung gemäß Komponente II des beanspruchten Mehrschichtkörpers sein.

Die auf die Folie aufgebrachte Farbmittelzusammensetzung kann gegenüber sichtbarem Licht transparent, transluzent oder opak sein. Wenn die Farbmittelzusammensetzung opak ist, wird nicht der gesamte zu durchstrahlende Folienbereich mit der Farbmittelzusammensetzung bedruckt. Auf diese Weise können beispielsweise Anzeigeelemente eingeblendet werden.

Es ist auch möglich, dass verschiedene Folienbereiche mit unterschiedlichen Farbmittelzusammensetzungen bedruckt oder mehrere Schichten aus unterschiedlichen Farbmittelzusammensetzungen übereinander gedruckt werden. Eine bevorzugte Ausführungsform ist hier das Übereinanderdrucken von durchleuchtbaren, das heißt transparenten oder transluzenten Farbmittelzusammensetzungen mit opaken Farbmittelzusammensetzungen. Besonders bevorzugt haben diese beiden Farbmittelzusammensetzungen dieselbe oder eine ähnliche Farbgebung.

### Folie

Bei der Folie kann es sich um eine einlagige Folie oder um eine Multilagenfolie handeln. Die eine oder mehreren weiteren Schichten bei dem Multilagenaufbau können beispielsweise über Coextrusion, Lamination und/oder Beschichtungsverfahren, wie Nassbeschichtungsverfahren oder Plasmabeschichtungsverfahren, aufgebracht sein.

Bevorzugt handelt es sich bei der Folie um eine Folie aus einer thermoplastischen Zusammensetzung, enthaltend ein oder mehrere thermoplastische Polymere und gegebenenfalls weitere Additive. Als Additive können übliche Polymeradditive eingesetzt werden. Insbesondere kann die thermoplastische Zusammensetzung durch geeignete Farbmittel eingefärbt sein.

Thermoplastische Polymere sind beispielsweise thermoplastische Polyurethane, Polymethylmethacrylat (PMMA) sowie modifizierte Varianten von PMMA, Polyolefine, aromatisches Polycarbonat (PC), auch umfassend Copolycarbonat (Co-PC), Polyetherimid, Styrol-Acrylnitril, Acrylnitril-Styrol-Acrylester-Copolymerisate (ASA), Acrylnitril-Butadien-Styrol-Copolymerisate (ABS), Polyester und Mischungen dieser Polymere.

Als Material für die Folie bevorzugt sind thermoplastische Polymere auf Basis von Polycarbonat.

In einer alternativen bevorzugten Ausführungsform werden für die Folie thermoplastische Polymere auf Basis von Polymethylmethyacrylat verwendet.

"Auf Basis von" bedeutet hierbei einen Anteil des Polymers an der Gesamtzusammensetzung der Folie von mindestens 60 Gew.-%, bevorzugt mindestens 75 Gew.-%, weiter bevorzugt mindestens 90 Gew.-%.

Die Folie ist in bevorzugter Ausführungsform ganzheitlich durchleuchtbar. Die Bedeutung des Begriffs durchleuchtbar ist oben erläutert.

Es ist möglich, dass nur Teile der Folie von einer Lichtquelle durchleuchtet werden. Das kann beispielsweise erreicht werden, indem eine Folie aus mehreren Lagen verwendet wird. Dann kann eine der Lagen eine hohe Transmission für sichtbares Licht (d.h. Licht im Wellenlängenbereich des Spektrums von 380 bis 780 nm) aufweisen und eine weitere Lage opak, aber mit Löchern, Schlitzen oder ähnlichen Durchlässen für das Licht ausgestattet sein. In einem solchen Aufbau sind nur die Teile der Folie durchleuchtbar, an denen die opake Lage einen Durchlass für das Licht aufweist.

Die Folie ist in ihrer tatsächlich eingesetzte Dicke im zu durchstrahlenden Bereich für sichtbares Licht durchleuchtbar. Unter "durchleuchtbar" werden im Sinne der vorliegenden Erfindung bevorzugt Folien verstanden, die mindestens in den Bereichen, die von der Lichtquelle durchleuchtet werden sollen, bei mindestens einer Wellenlänge im sichtbaren Wellenlängenbereich des Spektrums (380 bis 780 nm) einen Transmissionsgrad von mindestens 20 %, weiter bevorzugt mindestens 50 %, besonders bevorzugt mindestens 70 %, bestimmt gemäß der Vorgaben in der DIN/ISO 13468-2 (Version von 2006, (Lichtquelle: D65, Beobachter: 10°)), aufweisen.

In bevorzugter Ausführungsform weist die gesamte Folie einen visuellen Transmissionsgrad von mindestens 20 %, bevorzugt mindestens 50 %, besonders bevorzugt mindestens 70 %, bestimmt nach DIN/ISO 13468-2 (Version von 2006) (Lichtquelle: D65, Beobachter: 10°) auf.

Am meisten bevorzugt weist die Folie darüber hinaus einen Gelbwert als Maß für die Farbneutralität, gemessen nach ASTM E313 (Version von 2010), von maximal 20, bevorzugt maximal 5, besonders bevorzugt maximal 2 auf.

Die Dicke der Folie beträgt 50 µm bis 1 mm, bevorzugt 100 µm bis 700 µm. Diese Angabe ist so zu verstehen, dass die Folie diese Dicke an jeder Stelle ihrer Ausdehnung aufweist.

Die Folie kann auf der der Trägerschicht abgewandten Seite mit einem Beschichtungsmittel beschichtet sein. Eine Beschichtung soll üblicherweise einen mechanischen Schutz gegen Abrieb und Verkratzung und/oder einen Schutz gegen Bewitterungseinflüsse, d.h. Beregnung, Temperatur und UV-Strahlung, bieten. Mit einer Beschichtung kann auch eine bestimmte Oberflächenhaptik oder -optik erreicht werden,

Geeignete Beschichtungen sind beispielsweise thermisch härtende Beschichtungssysteme auf Basis eines Polysiloxanlackes, die sowohl einschichtig als auch mehrschichtig (mit einer lediglich haftvermittelnden Primerschicht zwischen Substrat und Polysiloxandecklack) sein können.

Ebenso können UV-härtende Beschichtungssysteme, z.B. auf Acrylat-, Urethanacrylat oder Acrylsilanbasis, die gegebenenfalls Füllstoffe zur Verbesserung der Kratzfestigkeit beinhalten, eingesetzt werden.

Es ist weiterhin möglich, dass in der Beschichtung und/oder der Folie selbst Farbmittel wie oben angegeben enthalten sind.

Beispielsweise kann die thermoplastische Zusammensetzung, aus der die Folie besteht, solche Farbmittel enthalten. In solchen Fällen ist dann die Folie an sich durchgefärbt. Dann kann beispielsweise als Schicht (II) an Teilen der Fläche zwischen Folie und Trägermaterial eine Farbmittelzusammensetzung aufgetragen werden, die opak ist.

Sind Farbmittel in der Beschichtung der Folie enthalten, so können zusätzlich zu den oben angegebenen Farbmitteln solche ausgewählt werden, die eine geringere Temperaturbeständigkeit aufweisen.

Enthält die Beschichtung der Folie oder die thermoplastische Zusammensetzung, aus der die Folie besteht, Farbmittel, so handelt es sich um solche Farbmittel und/oder eine solche Konzentration an Farbmitteln, dass die Durchleuchtbarkeit der Folie weiterhin gegeben ist. Das bedeutet, dass die Einfärbung der Beschichtung auf der der Trägerschicht abgewandten Seite oder die Folie selbst nicht opak sind.

### Herstellung der Mehrschichtkörper

Die Herstellung der Mehrschichtkörper erfolgt bevorzugt über das FIM-Verfahren (Film-Insert-Molding). Das Film-Insert-Molding (FIM) oder Folienhinterspritzen ist ein Sonderverfahren des Spritzgießens, bei dem vor dem Einspritzen der Kunststoffschmelze optional dreidimensional vorgeformte Folien als Einleger in das Spritzgießwerkzeug eingelegt werden. Das Verfahren an sich ist dem Fachmann bekannt und wird vielfach angewendet.

Die Einleger sind meist umgeformte, optional dekorierte Folien. Für die Umformverfahren kann eine mechanische oder berührungslose Thermoverformung verwendet werden. Hierfür wird beispielsweise das Tiefziehverfahren verwendet. Weitere Verfahren sind Vakuum-Tiefziehen, Pressen oder Blasverformen. Bei engerer Positionstoleranz wird das bekannte High Pressure Forming (HPF) Verfahren verwendet, wie es beispielsweise in EP 2 197 656 B1 beschrieben ist. Die Folien werden in der Regel nach der Verformung beschnitten. Hierfür können die gängigen Verfahren wie Stanzen, Fräsen, Klingenschnitt, Laserstrahlschneiden und Wasserstrahlschneiden eingesetzt werden.

Vereinfacht ausgedrückt werden zur Herstellung der erfindungsgemäßen Mehrschichtkörper im bevorzugten Verfahren also die folgenden Schritte durchgeführt:
a) Bedrucken der Folie mit der Farbmittelzusammensetzung
b) Optional Umformen und optional anschließend Beschneiden der Folie
c) Hinterspritzen der Folie mit aufgeschmolzener Formmasse der Trägerschicht in einem Spritzgusswerkzeug.

Es ist auch möglich, dass die dreidimensionale Verformung der Folie und das Hinterspritzen der Folie in einem einzigen Spritzgießwerkzeug erfolgt. Ein solches vereinfachtes Verfahren ist beispielsweise in WO 2014/044694 A1 offenbart.

Das Bedrucken der Folien kann mit verschiedenen Druckverfahren durchgeführt werden, wie etwa Sieb-, Offset- und Digitaldruck mit Elektrofotografie oder Tintenstrahl.

Weitere mögliche Verfahren zum Bedrucken der Folie sind Lackieren, Tampondruck, Hochdruck (inkl. Flexo), Flachdruck und Tiefdruck.

Welches Verfahren eingesetzt wird, hängt unter anderem von Druckauflage, Bauteilform, Anforderungen an die Druckqualität und der Folienart ab.

Der Digitaldruck ermöglicht das farbige Drucken, ohne dass zuvor eine Druckform oder - platte hergestellt werden muss. Die digitalisierten Druckdaten werden direkt an eine digitale Druckmaschine gegeben. Dieses Verfahren ermöglicht ein schnelles Drucken nach Bedarf und hohe Flexibilität bei der Auflage bis hinab zu Einzelauflagen. Die beiden wichtigsten Digitaldrucktechniken sind die Elektrofotografie und der Tintenstrahldruck. Die digitalisierten Informationen werden vor allem mittels Elektrofotografie gedruckt, die dem Farblaser-Kopieren ähnelt. Ein weiteres Verfahren zum Drucken digitalisierter Informationen, ist der Tintenstrahldruck. Er nutzt hochpräzise Mikrodüsen, um Tinte direkt auf die zu bedruckende Oberfläche zu schießen. Dabei sind die Tinten so auszuwählen, dass sie die Folienoberfläche gut benetzen und fest auf ihr haften.

Der Offset-Druck eignet sich wegen der hohen Druckgeschwindigkeit besonders zur wirtschaftlichen Produktion großer Mengen (Druckauflagen) wird z. B. für die Erzeugung sehr feiner Linienmuster verwendet.

Bevorzugt wird als Druckverfahren der Siebdruck angewandt. Der Siebdruck ergibt Druckbilder mit hoher Opazität und Farbdichte. Das ist wichtig für Anwendungen in Durchlichttechnik, in denen bedruckte Folien hinterleuchtet werden, z. B. bei Automobilbauteilen mit Tag-Nacht-Design wie Zifferblättern oder dekorativen Beleuchtungselementen.

Bei der Bedruckung kann es sich beispielsweise um ein Firmenemblem, eine Fahrzeugtypen- oder Fahrzeugklassenbezeichnung, einen Text oder ein rein dekoratives Muster handeln.

Es ist auch möglich, dass nach dem Hinterspritzen der Folie mit dem Trägermaterial eine weitere Schicht des Trägermaterials in einem Umspritzprozess aufgetragen wird, so dass sich diese weitere Schicht nahtlos um die Oberfläche des nach dem Hinterspritzen erhaltenen Bauteils legt. Das Verfahren des Umspritzens ist dem Fachmann bekannt und ist beispielsweise in den Druckschriften WO 2012/069590 A1, EP2402140 A1 und DE 102007011338 A1 beschrieben.

In einer weiteren bevorzugten Ausführungsform wird auf den Kunststoffkörper optional zusätzlich zur Folie gemäß Komponente III weiterhin eine Deckfolie aufgebracht. Bevorzugt wird diese Deckfolie auf der Seite angebracht, welche später im eingebauten Zustand des erfindungsgemäßen Mehrschichtkörpers bei seiner Endverwendung auf der dem Betrachter zugewandten Seite liegt. In einer stärker bevorzugten Ausführungsform ist die Deckfolie eine Hartüberzugfolie, welche auch als Hardcoat-beschichtete Folie bezeichnet wird.

Die Dicke der Trägerschicht I beträgt bevorzugt 0,5 bis 10 mm, weiter bevorzugt 1 bis 5 mm. Diese Angabe ist so zu verstehen, dass die Trägerschicht I diese Dicke an jeder Stelle ihrer Ausdehnung aufweist. Dabei weistdie Schicht, die durch direktes Hinterspritzen der Folie entsteht, nicht zwingend über die gesamte Fläche der Folie dieselbe Dicke auf, sondern kann auch unterschiedliche Dicken aufweisen, beispielsweise durch Ausbildung von Verstärkungsrippen, aufgrund der Bauteilform, aufgrund von Befestigungsstrukturen etc.

Im zu durchleuchtenden Bereich weist die Trägerschicht I bevorzugt eine Dicke von 0,5 bis 5 mm, besonders bevorzugt von 1,5 bis 3,5 mm, besonders bevorzugt von 1,7 bis 2,5 mm auf.

### Beispiele

### Komponente A-1:

Lineares Polycarbonat auf Basis Bisphenol-A mit einem gewichtsgemittelten Molekulargewicht M_{W} von 24.000 g/mol (bestimmt durch GPC bei Raumtemperatur in Methylenchlorid gegen einen BPA-PC-Standard).

### Komponente A-2:

Lineares Polycarbonat auf Basis Bisphenol-A mit einem gewichtsgemittelten Molekulargewicht M_{W} von 28.000 g/mol (bestimmt durch GPC bei Raumtemperatur in Methylenchlorid gegen einen BPA-PC-Standard).

### Komponente B-1:

Acrylnitril(A)-Butadien(B)-Styrol(S)-Polymer, hergestellt im Masse-Polymerisationsverfahren, welches eine disperse Phase aus mit Styrol-Acrylnitril-Copolymerisat gepfropften Kautschukpartikeln basierend auf einem Polybutadienkautschuk als Pfropfgrundlage enthaltend als separierte disperse Phase eingeschlossenes Styrol-Acrylnitril-Copolymerisat sowie eine nicht chemisch an die Kautschukpartikel gebundene und nicht in den Kautschukpartikeln eingeschlossene Styrol-Acrylnitril-Copolymerisat-Matrix enthält. Komponente B-1 weist ein A:B:S-Verhältnis von 23:10:67 Gew.-% und einen Gelgehalt, bestimmt als in Aceton unlöslicher Anteil, von 20 Gew.-% auf. Der in Aceton lösliche Anteil der Komponente B-1 weist ein gewichtsgemitteltes Molekulargewicht M_{w} (gemessen per GPC in Tetrahydrofuran als Lösungsmittel mit Polystyrol als Standard) von 165 kg/mol auf. Die mittlere Partikelgröße der dispersen Phase D50, gemessen per Ultrazentrifugation, beträgt 0,85 µm. Die Schmelzeflussrate (MVR) der Komponente B-1, gemessen nach ISO 1133 (Version von 2012) bei 220°C mit einer Stempellast von 10 kg, beträgt 6,7 ml/10 min.

### Komponente B-2:

Acrylnitril(A)-Butadien(B)-Styrol(S)-n-Butylacrylat(BA)-Polymer, hergestellt im Masse-Polymerisationsverfahren, welches eine disperse Phase aus mit Styrol-Acrylnitril-n-Butylacrylat-Terpolymerisat gepfropften Kautschukpartikeln basierend auf einem Polybutadienkautschuk als Pfropfgrundlage enthaltend als separierte disperse Phase eingeschlossenes Styrol-Acrylnitril-n-Butylacrylat Terpolymerisat sowie eine nicht chemisch an die Kautschukpartikel gebundene und nicht in den Kautschukpartikeln eingeschlossene Styrol-Acrylnitril-Copolymerisat-Matrix enthält. Komponente B-2 weist ein A:B:S:BA-Verhältnis von 22,5:10:63:4,5 Gew.-% und einen Gelgehalt, bestimmt als in Aceton unlöslicher Anteil, von 19 Gew.-% auf. Der in Aceton lösliche Anteil der Komponente B-2 weist ein gewichtsgemitteltes Molekulargewicht M_{w} (gemessen per GPC in Tetrahydrofuran als Lösungsmittel mit Polystyrol als Standard) von 115 kg/mol auf. Die mittlere Partikelgröße der dispersen Phase D50, gemessen per Ultrazentrifugation, beträgt 0,50 µm. Die Schmelzeflussrate (MFR) der Komponente C-1, gemessen nach ISO 1133 (Version von 2012) bei 220°C mit einer Stempellast von 10 kg, beträgt 28 g/10 min.

### Komponente B-3

Acrylnitril-Butadien-Styrol-Pfropfpolymerisat mit Kern-Schale-Struktur, hergestellt durch Emulsions-Polymerisation von 43 Gew.-% bezogen auf das ABS-Polymerisat einer Mischung aus 27 Gew.-% Acrylnitril und 73 Gew.-% Styrol in Gegenwart von 57 Gew.-% bezogen auf das ABS-Polymerisat eines teilchenförmig vernetzten Polybutadienkautschuks als Pfropfgrundlage. Diese Polybutadienkautschuk-Pfropfgrundlage weist eine bimodale Teilchengrößenverteilung mit Maxima bei 0,28 µm und 0,40 µm und eine mittlere Partikelgröße D50, gemessen per Ultrazentrifugation, von 0,35 µm auf.

Die Komponente B-3 enthält kein in den Kautschukpartikeln eingeschlossenes Styrol-Acrylnitril-Copolymerisat.

### Komponente B-4

Acrylnitril-Butadien-Styrol-Pfropfpolymerisat mit Kern-Schale-Struktur, hergestellt durch Emulsions-Polymerisation von 42 Gew.-% bezogen auf das ABS-Polymerisat einer Mischung aus 26 Gew.-% Acrylnitril und 74 Gew.-% Styrol in Gegenwart von 58 Gew.-% bezogen auf das ABS-Polymerisat eines agglomerierten partikulären Polybutadienkautschuks als Pfropfgrundlage. Diese Polybutadienkautschuk-Pfropfgrundlage weist eine im Vergleich zu der in Komponente B-3 verwendeten Pfropfgrundlage deutlich breitere und monomodale Teilchengrößenverteilung auf. Die mittlere Partikelgröße D50, gemessen per Ultrazentrifugation, liegt jedoch im ähnlichen Bereich wie bei der Komponente B-3 bei 0,38 µm.

Die Komponente B-4 enthält kein in den Kautschukpartikeln eingeschlossenes Styrol-Acrylnitril-Copolymerisat.

### Komponente B-5

Styrol-Acrylnitril-Copolymer, hergestellt im Masse-Polymerisationsverfahren, mit einem Acrylnitrilgehalt von 23 Gew.-% und mit einem gewichtsgemitteltem Molekulargewicht M_{w} von 100.000 Da gemessen per GPC bei Raumtemperatur in Tetrahydrofuran mit Polystyrol als Standard.

### Komponente C1:

Pentaerythrittetrastearat

### Komponente C-2:

Irganox^{™} B900 (BASF, Ludwigshafen, Deutschland)
Mischung aus 80 Gew.-% Tris(2,4-di-tert.-butyl-phenyl)-phospit (Irgafos^{™} 168)und 20
Gew.-% 2,6-Di-tert.-butyl-4-(octadecanoxycarbonylethyl)phenol (Irganox^{™} 1076)

### Komponente C3:

Irganox^{™} 1076 (BASF, Ludwigshafen, Deutschland)
2,6-Di-tert.-butyl-4-(octadecanoxycarbonylethyl)phenol

### Herstellung und Prüfung der erfindungsgemäßen Formmassen

Die Herstellung der Formmassen erfolgte auf einem Zweiwellenextruder ZSK25 der Fa. Coperion, Werner & Pfleiderer (Stuttgart, Deutschland) bei einer Massetemperatur von 260°C und unter Anlegen eines Unterdrucks von 100 mbar (absolut).

Die Prüfkörper wurden bei einer Massetemperatur von 260°C und bei einer Werkzeugtemperatur von 80°C auf einer Spritzgießmaschine Typ Arburg 270 E hergestellt.

Die Schmelzeviskosität wurde bestimmt bei einer Temperatur von 260°C und einer Scherrate von 1000 s⁻¹ gemäß ISO 11443 (Version von 2014).

Die IZOD-Kerbschlagzähigkeit wurde bestimmt bei Temperaturen im Bereich von -50°C bis 23°C an Prüfstäben der Dimension von 80 mm x 10 mm x 4 mm gemäß ISO 180/1A (Version von 2013). Aus den Messungen bei unterschiedlichen Temperaturen wurde die Zäh-Spröd-Übergangstemperatur als diejenige Temperatur ermittelt, bei der 50% der Prüfkörper in dem Test spröd und 50% zäh brechen.

Zur Beurteilung der Materialduktilität unter multiaxialer Belastung bei tiefen Temperaturen wurde ein Durchstoßversuch gemäß ISO 6603-2 (Version von 2002) bei -20°C an jeweils zehn Prüfkörpern der Dimension von 60 mm x 60 mm x 2 mm durchgeführt. Als Maß für die Materialduktilität unter multiaxialer Belastung dient dabei der prozentualer Anteil der Sprödbrüche. Unter einem Sprödbruch wird dabei ein Bruchversagen verstanden, in denen Teile des Prüfkörpers beim Durchstoßversuch splitternd herausgebrochen werden und/oder die Prüfkörper eine instabile Rissausbreitung zeigen, wodurch der Prüfkörper im Test entlang eines solches Risses komplett in zwei Teile auseinanderbricht.

Der Elastizitätsmodul E und die Bruchdehnung wurde bestimmt an Schulterstäben der Dimension von 170 mm x 10 mm x 4 mm bei 23°C gemäß ISO 527 (Version von 1996) mit einer Dehnrate von 1 mm/min (Elastizitätsmodul) bzw. 5 mm/min (Bruchdehnung).

Als Maß für die Wärmeformbeständigkeit wird die Erweichungstemperatur Vicat B/120 bestimmt an Prüfstäben der Dimension von 80 mm x 10 mm x 4 mm gemäß ISO 180/1A (Version von 2014).

Als Maß für die Durchleuchtbarkeit wurde der Totaltransmissionsgrad gemäß ISO 13468-2 (Version von 2006) (Lichtquelle: D65, Beobachter: 10°) an Prüfkörpern der Dimension von 60 mm x 40 mm x 2 mm (d.h. bei einer Materialdicke von 2 mm) bestimmt.

Als Maß für die Lichtdiffusivität wurde der Halbwertswinkel = Half Power Angle (HPA) der Lichtintensität verwendet. Größere Halbwertswinkel bedeuten dabei stärkere Lichtstreuung. Zur Ermittlung des Halbwertswinkels wird die Intensität des Lichts nach Durchleuchtung eines Prüfkörpers der Dimension von 60 mm x 40 mm x 2 mm (d.h. mit einer Materialdicke von 2 mm) in Abhängigkeit des Polarwinkels gemessen relativ zum Einfalllichtstrahl im Bereich von 0° bis 90° gemessen. Die erhaltenen Werte werden auf den Intensitätswert, welcher bei einem Winkel von 0° gemessen wird, normiert, so dass die normierte Intensität in Abhängigkeit vom Polarwinkel θ zwischen 0 und 1 variiert mit I(0°) =1. Der Halbwertswinkel (HPA) ist dabei als der Winkel definiert, bei dem die normierte Intensität auf 0.5 abgefallen ist, das heißt I(HPA)=0.5. Bei dieser Definition beträgt der theoretisch maximal mögliche Halbwertswinkel 60°.

**Tabelle 1: Zusammensetzungen und ihre Eigenschaften**

| **Komponente** | **1** | **V2** | **V3** | **V4** | **V5** | **V6** | **7** | **8** | **V9** | **10** | **11** | **12** | **V13** |
|---|---|---|---|---|---|---|---|---|---|---|---|---|---|
| A-1 | 80 | 80 | 80 | 80 | 80 | 80 | 60 | 70 | 90 | | | | |
| A-2 | | | | | | | | | | 60 | 70 | 80 | 90 |
| B-1 | 20 | | | | | | 40 | 30 | 10 | 40 | 30 | 20 | 10 |
| B-2 | | 20 | | | | | | | | | | | |
| B-3 | | | 5 | 2,5 | | | | | | | | | |
| B-4 | | | | | 5 | 2,5 | | | | | | | |
| B-5 | | | 15 | 17,5 | 15 | 17,5 | | | | | | | |
| C-1 | 0,5 | 0,5 | 0,5 | 0,5 | 0,5 | 0,5 | 0,5 | 0,5 | 0,5 | 0,5 | 0,5 | 0,5 | 0,5 |
| C-2 | 0,1 | 0,1 | 0,1 | 0,1 | 0,1 | 0,1 | 0,1 | 0,1 | 0,1 | 0,1 | 0,1 | 0,1 | 0,1 |
| C-3 | 0,2 | 0,2 | 0,2 | 0,2 | 0,2 | 0,2 | 0,2 | 0,2 | 0,2 | 0,2 | 0,2 | 0,2 | 0,2 |

| **Berechnete Größe** | | | | | | | | | | | | | |
|---|---|---|---|---|---|---|---|---|---|---|---|---|---|
| Kautschuk-Gehalt in der Zusammensetzung [Gew.-%] | 2,0 | 2,0 | 2,8 | 1,4 | 2,9 | 1,4 | 4,0 | 3,0 | 1,0 | 4,0 | 3,0 | 2,0 | 1,0 |

| **Eigenschaften** | | | | | | | | | | | | | |
|---|---|---|---|---|---|---|---|---|---|---|---|---|---|
| Transmission [%] | 52 | 46 | 46 | 51 | 44 | 49 | 47 | 49 | 60 | 46 | 48 | 52 | 58 |
| Halbwertswinkel [°] | 50 | 24 | 3 | 2 | 34 | 2 | 57 | 55 | 2 | 56 | 55 | 50 | 2 |
| Schmelzeviskosität [Pas] | 248 | 200 | 228 | 213 | 228 | 225 | 174 | 202 | 312 | 204 | 230 | 293 | 454 |
| Kerbschlagzähigkeit bei -30°C [kJ/m²] | 21 | 16 | 15 | 10 | 15 | 9 | 20 | 24 | 13 | 43 | 43 | 27 | 13 |
| Zäh-Spröd-Übergangstemperatur [°C] | 0 | 10 | 15 | >23 | 15 | >23 | -15 | -25 | >23 | -45 | -35 | -25 | >23 |
| Durchstoßversuch [% Sprödbruch] | 70 | 100 | 100 | 100 | 70 | 70 | 90 | 50 | 20 | 0 | 0 | 80 | 80 |
| E-Modul | 2325 | 2426 | 2432 | 2529 | 2410 | 2524 | 2289 | 2307 | 2341 | 2273 | 2310 | 2348 | 2356 |
| Reißdehnung | 60 | 101 | 54 | 57 | 59 | 52 | 62 | 59 | 53 | 53 | 85 | 94 | 86 |
| Vicat B120 | 135 | 134 | 135 | 134 | 135 | 134 | 124 | 131 | 138 | 123 | 131 | 136 | 138 |

Die Daten in Tabelle 1 zeigen, dass die erfindungsgemäßen Formmassen, welche als Komponente B die erfindungsgemäße Komponente B-1 enthalten und sich hinsichtlich des Polybutadienkautschuk-Gehaltes im erfindungsgemäßen Bereich befinden, eine überraschende vorteilhafte Kombination aus hoher Lichttransmission und hoher Lichtdiffusivität (Streukraft) aufweisen. Weiterhin zeigen die erfindungsgemäßen Formmassen eine vorteilhafte Kombination aus verbesserter Schmelzefließfähigkeit (reduzierter Schmelzeviskosität) und guten mechanischen Eigenschaften, insbesondere auch eine gute Materialzähigkeit selbst bei tiefen Temperaturen. Die nicht erfindungsgemäßen Formmassen, die als Komponente B die nicht erfindungsgemäßen Emulsions-ABS-Komponenten B-3 oder B-4 oder eine nicht erfindungsgemäße Masse-ABS-Komponente B-2 enthalten, erfüllen diese technische Aufgabe der Erfindung dagegen nicht. Gleiches gilt für die Formmassen aus den Zusammensetzungen V9 und V13, welche hinsichtlich ihres Gehalts an Polybutadienkautschuk außerhalb des erfindungsgemäßen Bereiches liegen.

Ein erfindungsgemäßer Mehrschichtkörper ist in Abbildung 1 schematisch dargestellt.

## Patentansprüche

1. Mehrschichtkörper,
umfassend in dieser Reihenfolge
(I) eine Trägerschicht aus einer thermoplastische Formmasse enthaltend
A) mindestens ein Vertreter ausgewählt aus der Gruppe bestehend aus aromatischem Polycarbonat und aromatischen Polyestercarbonat,
B) kautschukmodifiziertes Vinyl(co)polymerisat aus
B.1) 80 bis 95 Gew.-%, bezogen auf das kautschukmodifizierte Vinyl(co)polymerisat B, Struktureinheiten abgeleitet von wenigstens einem Vinylmonomeren und
B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C bestimmt mittels dynamischer Differenzkalorimetrie nach DIN EN 61006 in der Version von 1994 bei einer Heizrate von 10 K/min mit Bestimmung der Glasübergangstemperatur als Mittelpunkttemperatur enthaltend mindestens 50 Gew.-%, bezogen auf B.2, an vom 1,3-Butadien abgeleiteten Struktureinheiten,
wobei das kautschukmodifizierte Vinyl(co)polymerisat B
(i) eine disperse Phase bestehend aus
(i.1) mit Vinyl(co)polymerisat aus Struktureinheiten gemäß B.1 gepfropften Kautschukpartikeln und
(i.2) in den Kautschukpartikeln als separierte disperse Phase eingeschlossenes Vinyl(co)polymerisat ebenfalls aus Struktureinheiten gemäß B.1
und
(ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1
enthält,
wobei die disperse Phase gemäß (i) einen mittleren Durchmesser D50 gemessen per Ultrazentrifugation von 0,7 bis 2,0 µm aufweist,
C) optional mindestens eine weitere Komponente ausgewählt aus Polymeradditiven und polymeren Blendpartnern,
wobei die thermoplastische Formmasse weniger als 2 Gew.-% an von Komponente B) verschiedenen, kautschukbasierten Pfropfpolymeren enthält und
wobei die thermoplastische Formmasse einen Kautschukgehalt von mindestens 1,5 Gew.- % aufweist,
(II) mindestens eine Schicht bestehend aus einem Farbmittel oder einer Farbmittelzusammensetzung, die zumindest einen Teil der Fläche zwischen Trägerschicht und Folie bedeckt und
(III) eine Folie.

2. Mehrschichtkörper gemäß Anspruch 1, wobei die Folie durchleuchtbar ist.

3. Mehrschichtkörper gemäß Anspruch 1 oder 2, wobei die Folie aus einem thermoplastischen Material besteht.

4. Mehrschichtkörper gemäß einem der vorhergehenden Ansprüche, wobei die Folie zu mindestens 60 Gew.-% aus Methylmethacrylat besteht.

5. Mehrschichtkörper gemäß einem der Ansprüche 1 bis 3, wobei die Folie zu mindestens 60 Gew.-% aus Polycarbonat besteht.

6. Mehrschichtkörper gemäß einem der vorhergehenden Ansprüche, wobei die Dicke der Folie im Bereich 50 µm bis 1 mm liegt.

7. Mehrschichtkörper gemäß einem der vorhergehenden Ansprüche, wobei die Dicke der Trägerschicht im Bereich 1 bis 5 mm liegt.

8. Mehrschichtkörper gemäß einem der vorhergehenden Ansprüche, wobei der Mehrschichtkörper in Teilbereichen der Fläche zwischen der Trägerschicht (I) und der Folie (III) eine die Lichttransmission reduzierende Schicht (II) bestehend aus einem Farbmittel oder einer Farbmittelzusammensetzung umfasst und in diesen Bereichen der Mehrschichtkörper einen visuellen Transmissionsgrad von maximal 10 %, bestimmt nach DIN/ISO 13468-2 in der Version von 2006 mit einer Lichtquelle D65 und dem Beobachter bei 10° aufweist.

9. Mehrschichtkörper gemäß einem der vorhergehenden Ansprüche, wobei die Trägerschicht 30 bis 85 Gew.-%, der Komponente A,
14 bis 69 Gew.-% der Komponente B,
und 0,05 bis 20 Gew.-% der Komponente C
enthält.

10. Mehrschichtkörper gemäß einem der vorhergehenden Ansprüche, wobei die Trägerschicht einen Kautschukgehalt von 1,9 bis 4,1 Gew.-% aufweist.

11. Mehrschichtkörper gemäß einem der vorhergehenden Ansprüche, wobei die Komponente B der Trägerschicht durch ein Massepolymerisationsverfahren hergestellt wird.

12. Verwendung einer thermoplastischen Formmasse enthaltend
A) mindestens einen Vertreter ausgewählt aus der Gruppe bestehend aus aromatischem Polycarbonat und aromatischen Polyestercarbonat ,
B) kautschukmodifiziertes Vinyl(co)polymerisat aus
B.1) 80 bis 95 Gew.-%, bezogen auf das kautschukmodifizierte Vinyl(co)polymerisat B, Struktureinheiten abgeleitet von wenigstens einem Vinylmonomeren und
B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C bestimmt mittels dynamischer Differenzkalorimetrie nach DIN EN 61006 in der Version von 1994 bei einer Heizrate von 10 K/min mit Bestimmung der Glasübergangstemperatur als Mittelpunkttemperatur enthaltend mindestens 50 Gew.-%, bezogen auf B.2, an vom 1,3-Butadien abgeleiteten Struktureinheiten,
wobei das kautschukmodifizierte Vinyl(co)polymerisat B
(i) eine disperse Phase bestehend aus
(i.1) mit Vinyl(co)polymerisat aus Struktureinheiten gemäß B.1 gepfropften Kautschukpartikeln
und
(i.2) in den Kautschukpartikeln als separierte disperse Phase eingeschlossenes Vinyl(co)polymerisat ebenfalls aus Struktureinheiten gemäß B.1
und
(ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1
enthält,
wobei die disperse Phase gemäß (i) einen mittleren Durchmesser D50 gemessen per Ultrazentrifugation von 0,7 bis 2,0 µm aufweist,
C) optional mindestens eine weitere Komponente ausgewählt aus Polymeradditiven und polymeren Blendpartnern
wobei die thermoplastische Formmasse weniger als 2 Gew.-%, an von Komponente B) verschiedenen, kautschukbasierten Pfropfpolymeren enthält und
wobei die thermoplastische Formmasse einen Kautschukgehalt von mindestens 1,5 Gew.- % aufweist,
als Trägerschicht in einem Mehrschichtkörper,
wobei der Mehrschichtkörper folgende Komponenten in dieser Reihenfolge umfasst:
(I) die Trägerschicht,
(II) mindestens eine Schicht bestehend aus einem Farbmittel oder einer Farbmittelzusammensetzung, die zumindest einen Teil der Fläche zwischen Trägerschicht und Folie bedeckt, und
(III) eine Folie.

13. Verfahren zur Herstellung eines Mehrschichtkörpers,
umfassend die Schritte
a) Herstellung einer Folie
b) Bedrucken zumindest eines Teils der Folie mit mindestens einer Schicht bestehend aus einem Farbmittel oder einer Farbmittelzusammensetzung,
c) optional Thermoformen der Folie,
d) Hinterspritzen der Folie mit einer thermoplastischen Formmasse enthaltend
A) mindestens einen Vertreter ausgewählt aus der Gruppe bestehend aus aromatischem Polycarbonat und aromatischen Polyestercarbonat ,
B) kautschukmodifiziertes Vinyl(co)polymerisat aus
B.1) 80 bis 95 Gew.-%, bezogen auf das kautschukmodifizierte Vinyl(co)polymerisat B, Struktureinheiten abgeleitet von wenigstens einem Vinylmonomeren und
B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C bestimmt mittels dynamischer Differenzkalorimetrie nach DIN EN 61006 in der Version von 1994 bei einer Heizrate von 10 K/min mit Bestimmung der Glasübergangstemperatur als Mittelpunkttemperatur enthaltend mindestens 50 Gew.-%, bezogen auf B.2, an vom 1,3-Butadien abgeleiteten Struktureinheiten,
wobei das kautschukmodifizierte Vinyl(co)polymerisat B
(i) eine disperse Phase bestehend aus
(i.1) mit Vinyl(co)polymerisat aus Struktureinheiten gemäß B.1 gepfropften Kautschukpartikeln
und
(i.2) in den Kautschukpartikeln als separierte disperse Phase eingeschlossenes Vinyl(co)polymerisat ebenfalls aus Struktureinheiten gemäß B.1
und
(ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1
enthält,
wobei die disperse Phase gemäß (i) einen mittleren Durchmesser D50 gemessen per Ultrazentrifugation von 0,7 bis 2,0 µm aufweist,
C) optional mindestens eine weitere Komponente ausgewählt aus Polymeradditiven und polymeren Blendpartnern.
wobei die thermoplastische Formmasse weniger als 2 Gew.-%, an von Komponente B) verschiedenen, kautschukbasierten Pfropfpolymeren enthält und
wobei die thermoplastische Formmasse einen Kautschukgehalt von mindestens 1,5 Gew.-% aufweist.

14. Beleuchtungseinheit, umfassend
a) einen Mehrschichtkörper gemäß einem der Ansprüche 1 bis 11
b) eine Lichtquelle, welche Licht mit mindestens einer Wellenlänge im Wellenlängenbereich des Spektrums von 380 bis 780 nm ausstrahlt,
wobei die Lichtquelle so angeordnet ist, dass die Trägerschicht von dem von der Lichtquelle abgestrahlten Licht durchstrahlt wird.

15. Beleuchtungseinheit gemäß Anspruch 14, wobei es sich bei der Lichtquelle um eine LED-Lichtquelle handelt.

## Claims

1. Multilayer article
comprising in the following order
(I) a carrier layer composed of a thermoplastic moulding compound containing
A) at least one representative selected from the group consisting of aromatic polycarbonate and aromatic polyestercarbonate,
B) rubber-modified vinyl (co)polymer composed of
B.1) 80% to 95% by weight, based on the rubber-modified vinyl (co)polymer B, of structural units derived from at least one vinyl monomer and
B.2) 5% to 20% by weight, based on the rubber-modified vinyl (co)polymer B, of one or more elastomeric graft substrates having glass transition temperatures < -50°C determined by differential scanning calorimetry according to DIN EN 61006, 1994 version, at a heating rate of 10 K/min with determination of the glass transition temperature as a midpoint temperature and containing at least 50% by weight, based on B.2, of structural units derived from 1,3-butadiene,
wherein the rubber-modified vinyl (co)polymer B contains
(i) a disperse phase consisting of
(i.1) rubber particles grafted with vinyl (co)polymer composed of structural units of B.1 and
(i.2) vinyl (co)polymer likewise composed of structural units of B.1 enclosed in the rubber particles as a separate disperse phase
and
(ii) a rubber-free vinyl (co)polymer matrix consisting of structural units of B.1 which is not bonded to the rubber particles and is not enclosed in these rubber particles,
wherein the disperse phase of (i) has a median diameter D50 measured by ultracentrifugation of 0.7 to 2.0 µm,
C) optionally at least one further component selected from polymer additives and polymeric blend partners, wherein the thermoplastic moulding compound contains less than 2% by weight of rubber-based graft polymers distinct from component B) and
wherein the thermoplastic moulding compound has a rubber content of at least 1.5% by weight,
(II) at least one layer consisting of a colourant or a colourant composition covering at least a portion of the area between the carrier layer and the film and
(III) a film.

2. Multilayer article according to Claim 1, wherein the film is transilluminable.

3. Multilayer article according to Claim 1 or 2, wherein the film is composed of a thermoplastic material.

4. Multilayer article according to any of the preceding claims, wherein the film consists to an extent of at least 60% by weight of methyl methacrylate.

5. Multilayer article according to any of Claims 1 to 3, wherein the film consists to an extent of at least 60% by weight of polycarbonate.

6. Multilayer article according to any of the preceding claims, wherein the thickness of the film is in the range from 50 µm to 1 mm.

7. Multilayer article according to any of the preceding claims, wherein the thickness of the carrier layer is in the range from 1 to 5 mm.

8. Multilayer article according to any of the preceding claims, wherein in subregions of the area between the carrier layer (I) and the film (III) the multilayer article comprises a light transmittance-reducing layer (II) composed of a colourant or a colourant composition and in these regions the multilayer article has a visual transmittance of at most 10% determined according to DIN/ISO 13468-2, 2006 version, with a D65 light source and an angle to the observer of 10°.

9. Multilayer article according to any of the preceding claims, wherein the carrier layer contains
30% to 85% by weight of component A,
14% to 69% by weight of component B,
and 0.05% to 20% by weight of component C.

10. Multilayer article according to any of the preceding claims, wherein the carrier layer has a rubber content of 1.9% to 4.1% by weight.

11. Multilayer article according to any of the preceding claims, wherein component B of the carrier layer is produced by a bulk polymerization process.

12. Use of a thermoplastic moulding compound containing
A) at least one representative selected from the group consisting of aromatic polycarbonate and aromatic polyestercarbonate,
B) rubber-modified vinyl (co)polymer composed of
B.1) 80% to 95% by weight, based on the rubber-modified vinyl (co)polymer B, of structural units derived from at least one vinyl monomer and
B.2) 5% to 20% by weight, based on the rubber-modified vinyl (co)polymer B, of one or more elastomeric graft substrates having glass transition temperatures < -50°C determined by differential scanning calorimetry according to DIN EN 61006, 1994 version, at a heating rate of 10 K/min with determination of the glass transition temperature as a midpoint temperature and containing at least 50% by weight, based on B.2, of structural units derived from 1,3-butadiene,
wherein the rubber-modified vinyl (co)polymer B contains
(i) a disperse phase consisting of
(i.1) rubber particles grafted with vinyl (co)polymer composed of structural units of B.1
and
(i.2) vinyl (co)polymer likewise composed of structural units of B.1 enclosed in the rubber particles as a separate disperse phase
and
(ii) a rubber-free vinyl (co)polymer matrix consisting of structural units of B.1 which is not bonded to the rubber particles and is not enclosed in these rubber particles,
wherein the disperse phase of (i) has a median diameter D50 measured by ultracentrifugation of 0.7 to 2.0 µm,
C) optionally at least one further component selected from polymer additives and polymeric blend partners, wherein the thermoplastic moulding compound contains less than 2% by weight of rubber-based graft polymers distinct from component B) and
wherein the thermoplastic moulding compound has a rubber content of at least 1.5% by weight,
as a carrier layer in a multilayer article,
wherein the multilayer article comprises the following components in the following order:
(I) the carrier layer,
(II) at least one layer consisting of a colourant or a colourant composition covering at least a portion of the area between the carrier layer and the film, and
(III) a film.

13. Process for producing a multilayer article comprising the steps of
a) producing a film
b) printing at least a portion of the film with at least one layer consisting of a colourant or a colourant composition,
c) optionally thermoforming the film,
d) subjecting the film to insert moulding with a thermoplastic moulding compound containing
A) at least one representative selected from the group consisting of aromatic polycarbonate and aromatic polyestercarbonate,
B) rubber-modified vinyl (co)polymer composed of
B.1) 80% to 95% by weight, based on the rubber-modified vinyl (co)polymer B, of structural units derived from at least one vinyl monomer and
B.2) 5% to 20% by weight, based on the rubber-modified vinyl (co)polymer B, of one or more elastomeric graft substrates having glass transition temperatures < -50°C determined by differential scanning calorimetry according to DIN EN 61006, 1994 version, at a heating rate of 10 K/min with determination of the glass transition temperature as a midpoint temperature and containing at least 50% by weight, based on B.2, of structural units derived from 1,3-butadiene,
wherein the rubber-modified vinyl (co)polymer B contains
(i) a disperse phase consisting of
(i.1) rubber particles grafted with vinyl (co)polymer composed of structural units of B.1
and
(i.2) vinyl (co)polymer likewise composed of structural units of B.1 enclosed in the rubber particles as a separate disperse phase
and
(ii) a rubber-free vinyl (co)polymer matrix consisting of structural units of B.1 which is not bonded to the rubber particles and is not enclosed in these rubber particles,
wherein the disperse phase of (i) has a median diameter D50 measured by ultracentrifugation of 0.7 to 2.0 µm,
C) optionally at least one further component selected from polymer additives and polymeric blend partners,
wherein the thermoplastic moulding compound contains less than 2% by weight of rubber-based graft polymers distinct from component B) and
wherein the thermoplastic moulding compound has a rubber content of at least 1.5% by weight.

14. Lighting unit comprising
a) a multilayer article according to any of Claims 1 to 11
b) a light source emitting light having at least one wavelength in the wavelength range of the spectrum from 380 to 780 nm,
wherein the light source is arranged such that the carrier layer is trans illuminated by the light emitted by the light source.

15. Lighting unit according to Claim 14, wherein the light source is an LED light source.

## Revendications

1. Corps multicouche,
comprenant, dans cet ordre,
(I) une couche support constituée par une masse de moulage thermoplastique contenant
A) au moins un représentant choisi dans le groupe constitué par un polycarbonate aromatique et un polyestercarbonate aromatique,
B) un (co)polymère de vinyle modifié par du caoutchouc, constitué par
B.1) 80 à 95% en poids, par rapport au (co)polymère de vinyle modifié par du caoutchouc B, de motifs structuraux dérivés d'au moins un monomère de vinyle, et
B.2) 5 à 20% en poids, par rapport au (co)polymère de vinyle modifié par du caoutchouc B, d'une ou plusieurs bases de greffage présentant l'élasticité du caoutchouc, présentant des températures de transition vitreuse < - 50°C, déterminées par calorimétrie différentielle à balayage dynamique selon la norme DIN EN 61006 dans sa version de 1994 à une vitesse de chauffage de 10 K/min avec détermination de la température de transition vitreuse en tant que température au point médian, contenant au moins 50% en poids, par rapport à B.2, de motifs structuraux dérivés du 1,3-butadiène,
le (co)polymère de vinyle modifié par du caoutchouc B contenant
(i) une phase dispersée constituée par
(i.1) des particules de caoutchouc greffées par un (co)polymère de vinyle constitué par des motifs structuraux selon B.1 et
(i.2) un (co)polymère de vinyle également constitué par des motifs structuraux selon B.1, inclus dans les particules de caoutchouc en tant que phase dispersée séparée,
et
(ii) une matrice de (co)polymère de vinyle, constituée par des motifs structuraux selon B.1, exempte de caoutchouc, non liée aux particules de caoutchouc et non incluse dans ces particules de caoutchouc,
la phase dispersée selon (i) présentant un diamètre moyen D50 mesuré par ultracentrifugation de 0,7 à 2,0 µm,
C) éventuellement au moins un autre composant choisi parmi les additifs polymères et les partenaires de mélange polymères,
la masse de moulage thermoplastique contenant moins de 2% en poids de polymères greffés à base de caoutchouc, différents du composant B) et
la masse de moulage thermoplastique présentant une teneur en caoutchouc d'au moins 1,5% en poids,
(II) au moins une couche constituée par un colorant ou une composition de colorant, qui recouvre au moins une partie de la surface entre la couche support et une feuille et
(III) une feuille.

2. Corps multicouche selon la revendication 1, la feuille pouvant être traversée par la lumière.

3. Corps multicouche selon la revendication 1 ou 2, la feuille étant constituée par un matériau thermoplastique.

4. Corps multicouche selon l'une des revendications précédentes, la feuille étant constituée à raison d'au moins 60% en poids de méthacrylate de méthyle.

5. Corps multicouche selon l'une des revendications 1 à 3, la feuille étant constituée à raison d'au moins 60% en poids de polycarbonate.

6. Corps multicouche selon l'une quelconque des revendications précédentes, l'épaisseur de la feuille se situant dans une plage de 50 µm à 1 mm.

7. Corps multicouche selon l'une quelconque des revendications précédentes, l'épaisseur de la couche support se situant dans une plage de 1 à 5 mm.

8. Corps multicouche selon l'une des revendications précédentes, le corps multicouche comprenant, dans des zones partielle de la surface entre la couche support (I) et la feuille (III), une couche (II) réduisant la transmission de la lumière, constituée par un colorant ou une composition de colorant et présentant, dans ces zones du corps multicouche, un taux de transmission visuelle d'au maximum 10%, déterminée selon la norme DIN/ISO 13468-2 dans sa version de 2006 à l'aide d'une source lumineuse D65 et de l'observateur à 10°.

9. Corps multicouche selon l'une des revendications précédentes, la couche support contenant
30 à 85% en poids du composant A,
14 à 69% en poids du composant B,
et 0,05 à 20% en poids du composant C.

10. Corps multicouche selon l'une des revendications précédentes, la couche support présentant une teneur en caoutchouc de 1,9 à 4,1% en poids.

11. Corps multicouche selon l'une des revendications précédentes, le composant B) de la couche support étant préparé par un procédé de polymérisation en masse.

12. Utilisation d'une masse de moulage thermoplastique contenant
A) au moins un représentant choisi dans le groupe constitué par un polycarbonate aromatique et un polyestercarbonate aromatique,
B) un (co)polymère de vinyle modifié par du caoutchouc, constitué par
B.1) 80 à 95% en poids, par rapport au (co)polymère de vinyle modifié par du caoutchouc B, de motifs structuraux dérivés d'au moins un monomère de vinyle, et
B.2) 5 à 20% en poids, par rapport au (co)polymère de vinyle modifié par du caoutchouc B, d'une ou plusieurs bases de greffage présentant l'élasticité du caoutchouc, présentant des températures de transition vitreuse < - 50°C, déterminées par calorimétrie différentielle à balayage dynamique selon la norme DIN EN 61006 dans sa version de 1994 à une vitesse de chauffage de 10 K/min avec détermination de la température de transition vitreuse en tant que température au point médian, contenant au moins 50% en poids, par rapport à B.2, de motifs structuraux dérivés du 1,3-butadiène,
le (co)polymère de vinyle modifié par du caoutchouc B contenant
(i) une phase dispersée constituée par
(i.1) des particules de caoutchouc greffées par un (co)polymère de vinyle constitué par des motifs structuraux selon B.1
et
(i.2) un (co)polymère de vinyle également constitué par des motifs structuraux selon B.1, inclus dans les particules de caoutchouc en tant que phase dispersée séparée,
et
(ii) une matrice de (co)polymère de vinyle, constituée par des motifs structuraux selon B.1, exempte de caoutchouc, non liée aux particules de caoutchouc et non incluse dans ces particules de caoutchouc,
la phase dispersée selon (i) présentant un diamètre moyen D50 mesuré par ultracentrifugation de 0,7 à 2,0 µm,
C) éventuellement au moins un autre composant choisi parmi les additifs polymères et les partenaires de mélange polymères,
la masse de moulage thermoplastique contenant moins de 2% en poids de polymères greffés à base de caoutchouc différents du composant B) et
la masse de moulage thermoplastique présentant une teneur en caoutchouc d'au moins 1,5% en poids,
en tant que couche support dans un corps multicouche,
le corps multicouche comprenant les composants suivants, dans cet ordre :
(I) la couche support,
(II) au moins une couche constituée par un colorant ou une composition de colorant, qui recouvre au moins une partie de la surface entre la couche support et une feuille et
(III) une feuille.

13. Procédé de fabrication d'un corps multicouche,
comprenant les étapes de
a) fabrication d'une feuille
b) impression d'au moins une partie de la feuille par au moins une couche constituée par un colorant ou une composition de colorant,
c) éventuellement thermoformage de la feuille,
d) surmoulage par injection de la feuille par une masse de moulage thermoplastique contenant
A) au moins un représentant choisi dans le groupe constitué par un polycarbonate aromatique et un polyestercarbonate aromatique,
B) un (co)polymère de vinyle modifié par du caoutchouc, constitué par
B.1) 80 à 95% en poids, par rapport au (co)polymère de vinyle modifié par du caoutchouc B, de motifs structuraux dérivés d'au moins un monomère de vinyle, et
B.2) 5 à 20% en poids, par rapport au (co)polymère de vinyle modifié par du caoutchouc B, d'une ou plusieurs bases de greffage présentant l'élasticité du caoutchouc, présentant des températures de transition vitreuse < - 50°C, déterminées par calorimétrie différentielle à balayage dynamique selon la norme DIN EN 61006 dans sa version de 1994 à une vitesse de chauffage de 10 K/min avec détermination de la température de transition vitreuse en tant que température au point médian, contenant au moins 50% en poids, par rapport à B.2, de motifs structuraux dérivés du 1,3-butadiène,
le (co)polymère de vinyle modifié par du caoutchouc B contenant
(i) une phase dispersée constituée par
(i.1) des particules de caoutchouc greffées par un (co)polymère de vinyle constitué par des motifs structuraux selon B.1
et
(i.2) un (co)polymère de vinyle également constitué par des motifs structuraux selon B.1, inclus dans les particules de caoutchouc en tant que phase dispersée séparée,
et
(ii) une matrice de (co)polymère de vinyle, constituée par des motifs structuraux selon B.1, exempte de caoutchouc, non liée aux particules de caoutchouc et non incluse dans ces particules de caoutchouc,
la phase dispersée selon (i) présentant un diamètre moyen D50 mesuré par ultracentrifugation de 0,7 à 2,0 µm,
C) éventuellement au moins un autre composant choisi parmi les additifs polymères et les partenaires de mélange polymères,
la masse de moulage thermoplastique contenant moins de 2% en poids de polymères greffés à base de caoutchouc différents du composant B) et
la masse de moulage thermoplastique présentant une teneur en caoutchouc d'au moins 1,5% en poids.

14. Unité d'éclairage comprenant
a) un corps multicouche selon l'une des revendications 1 à 11
b) une source lumineuse qui émet de la lumière à au moins une longueur d'onde dans la plage de longueurs d'onde du spectre de 380 à 780 nm,
la source lumineuse étant agencée de telle sorte que la couche support est traversée par la lumière émise par la source lumineuse.

15. Unité d'éclairage selon la revendication 14, la source lumineuse étant une source lumineuse à DEL.
